# FASCICULE DE BREVET EUROPEEN

(11) **EP 0 532 427 B1**
(45) Date de publication et mention de la délivrance du brevet: **02.11.1995**
(21) Numéro de dépôt: 92402497.9
(22) Date de dépôt: 11.09.1992
(51) Int. Cl.: F02M 37/10, B60K 15/077

(54) **Dispositif pour aspirer du carburant au fond d'un reservoir deformable**
Vorrichtung zum Absaugen von Kraftstoff vom Boden eines verformbaren Behälters
Suction device for extracting fuel from the bottom of a deformable tank

(30) Priorité: 12.09.1991 FR 9111265
(43) Date de publication de la demande: 17.03.1993
(73) Titulaire: COMPAGNIE PLASTIC OMNIUM Société Anonyme dite:, 69007 Lyon (FR)
(72) Inventeur: Bousselin, Geoffroy, F-60750 Choisy au Bac (FR)
(74) Mandataire: Leszczynski, André

(56) Documents cités:
- EP-A- 0 087 508
- EP-A- 0 297 256
- FR-A- 2 583 684
- US-A- 5 038 741

## Description

La présente invention a pour objet un dispositif pour aspirer du carburant au fond d'un réservoir déformable, tel qu'un réservoir à carburant de véhicules automobiles.

Les dispositifs de type connu pour aspirer du carburant au fond d'un réservoir déformable, comme par exemple celui décrit dans EP-A-0 297 256, comportent généralement une platine apte à être fixée de manière étanche sur le réservoir, et comportant une tubulure de départ de carburant et une tubulure de retour de carburant ainsi qu'un pied d'aspiration prenant appui sur le fond du réservoir.

Du fait des déformations du réservoir dues notamment à des variations de température et de pression ainsi qu'à la charge de carburant, la position du pied d'aspiration est variable dans une certaine plage, de l'ordre de plusieurs centimètres.

Pour appliquer constamment le pied d'aspiration sur le fond du réservoir, il est nécessaire d'exercer un appui élastique du pied d'aspiration contre le fond du réservoir et de permettre un coulissement vertical du pied par rapport à la platine.

Des dispositifs connus comportent à cet effet un pied d'aspiration pouvant coulisser verticalement coopérant avec un ressort de compression comprimé d'environ un cm par rapport à sa longueur libre. La tubulure de départ de carburant solidaire de la platine est reliée au pied d'aspiration par un tube en caoutchouc revêtu d'une tresse textile extérieure. Ce tube est peu flexible et de longueur importante correspondant à l'enroulement de ce tube sensiblement suivant un cercle de diamètre relativement important, les extrémités dudit tube étant dirigées respectivement vers la platine et le pied d'aspiration.

On connait par ailleurs par EP-A-0087508 un dispositif comportant un soufflet élastique tronconique relié à la tubulure de départ. La déformation du soufflet est difficile à contrôler de sorte qu'un coulissement vertical ne peut être parfaitement assuré.

L'invention a pour but de créer un dispositif évitant les inconvénients précités tout en étant d'encombrement faible et plus économique à fabriquer et à assembler.

Selon l'invention, le dispositif pour aspirer du carburant au fond d'un réservoir déformable, comporte une platine apte à être fixée de manière étanche sur le réservoir, ladite platine comportant une tubulure de départ de carburant, une tubulure de retour de carburant, et un pied d'aspiration prenant appui sur le fond du réservoir, et se caractérise par le fait que ladite tubulure de départ est reliée audit pied d'aspiration par un tuyau déformable comportant au moins une partie déformable axialement en particulier de forme annelée apte à exercer un appui élastique sur le pied d'aspiration contre le fond du réservoir, ledit tuyau déformable coulissant le long d'un tube-insert sensiblement rectiligne.

L'invention sera mieux comprise au regard de la description qui va suivre donnée à titre d'exemple nullement limitatif au regard du dessin annexé dans lequel :
- la figure 1 est une vue schématique d'un dispositif d'aspiration de carburant de l'art antérieur,
- la figure 2 est une vue schématique en perspective d'un tuyau déformable de l'art antérieur;
- la figure 3 est une vue schématique avec coupe partielle d'un dispositif selon l'invention.

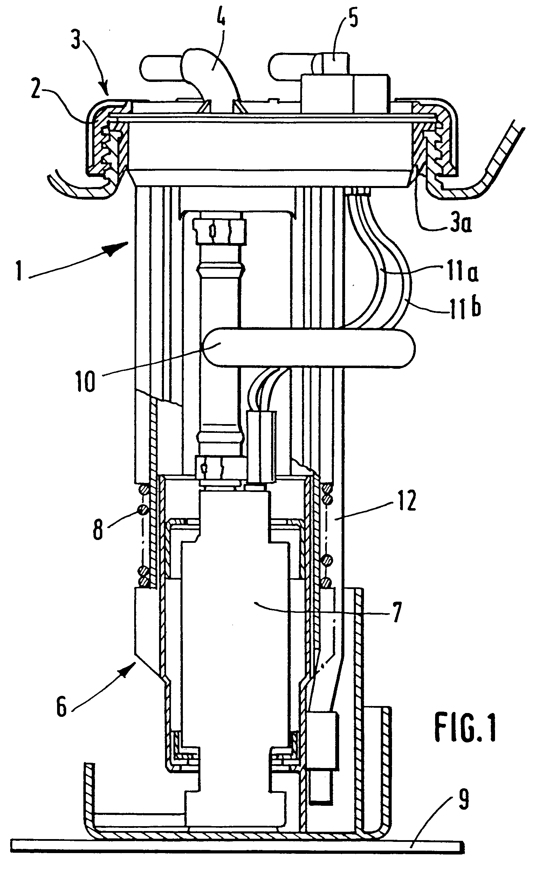

En référence à la figure 1, un dispositif d'aspiration de carburant de l'art antérieur comporte une platine 1 apte à être fixée de manière étanche sur un réservoir de carburant. La platine comporte un rebord 2 sensiblement plan apte à être fixé par un vissage d'un bouchon 3 sur le réservoir. Un joint 3a est serré entre la platine 1 et le réservoir pour assurer l'étanchéité.

La platine 1 comporte une tubulure 4 de départ de carburant ainsi qu'une tubulure 5 de retour de carburant.

Un pied d'aspiration 6 apte à coulisser verticalement comporte par exemple une pompe 7 dans le cas d'un moteur à essence, ou ne comporte aucune pompe dans le cas d'un moteur diesel. Le pied 6 est appliqué par le ressort hélicoïdal de compression 8, comprimé d'environ 10 mm par rapport à l'état libre, contre le fond 9 du réservoir.

Un tube 10 par exemple en caoutchouc revêtu d'une tresse textile est relié au pied d'aspiration 6 d'une part, ainsi qu'à la tubulure de départ 4 d'autre part pour permettre le passage du carburant.

Dans le cas d'un moteur à essence, la pompe 7 est de préférence alimentée électriquement par deux conducteurs 11a et 11b. La tubulure de retour 5 est prolongée par un tube 12 débouchant sensiblement au fond du réservoir de carburant.

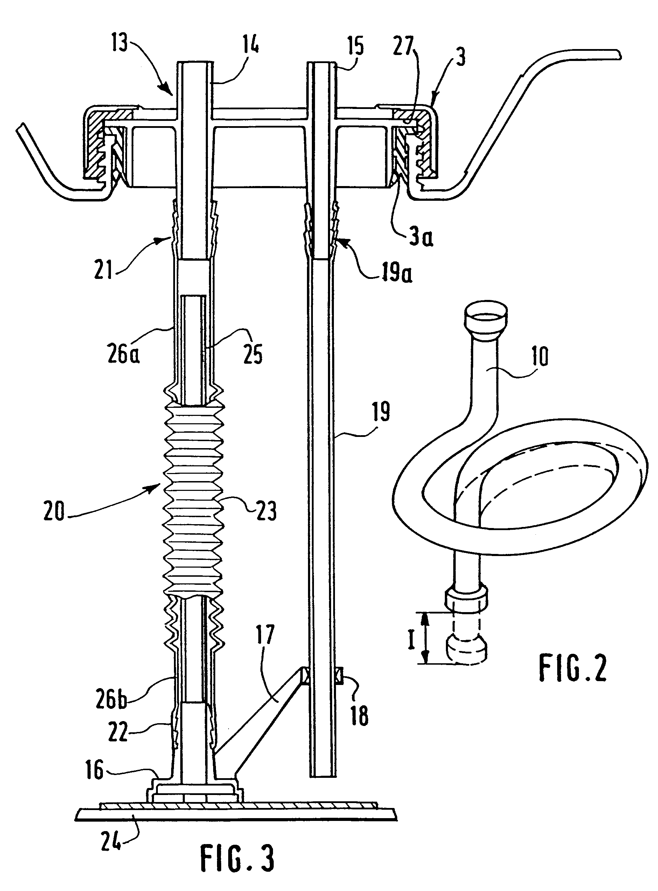

En référence à la figure 2, on voit que le tube 10 reliant la tubulure de départ 4 au pied d'aspiration 6 est enroulé sensiblement suivant un cercle, de manière à permettre une déformation de ce tube qui est relativement rigide et un déplacement dans le sens vertical suivant un débattement fonction des variations de niveau du fond du réservoir.

En référence à la figure 3, un dispositif selon l'invention comporte une platine 13 munie d'une tubulure de départ de carburant 14 et d'une tubulure de retour de carburant 15. Un pied d'aspiration 16 comporte un élément de guidage 17 anti-rotation avec une extrémité en forme de bague 18 apte à coulisser le long d'un tube formant guide 19 faisant partie de ou raccordé de manière étanche à la tubulure de retour 15 par emboîtement d'un raccord rapide 19a, en utilisant par exemple un embout de type "SAPIN" pour tuyau souple démontable.

Conforménent à l'invention, la tubulure de départ 14 est reliée au pied d'aspiration 16 par un tuyau déformable 20 apte à exercer un appui élastique sur le pied d''aspiration 16 contre le fond 24 du réservoir

Le tuyau déformable 20 comporte à ses extrémités supérieure et inférieure un raccord à emboîtement étanche 21, 22 respectivement, par exemple en utilisant un embout de type "SAPIN" pour tuyau souple démontable.

Le tuyau déformable 20 comporte au moins une partie 23 de forme annelée apte qui exerce l'appui élastique sur le pied d'aspiration 16 contre le fond du réservoir 24, lorsque ladite partie est comprimée par rapport à l'état libre d'un ou plusieurs centimètres.

Le tuyau 20 remplit ainsi les fonctions du ressort 8 tout en permettant un débattement dans le sens vertical analogue au déplacement au tuyau 10 de la figure 2. De préférence, le tuyau déformable 20 est en polyamide ou une matière analogue résistant aux hydrocarbures et possédant des propriétés élastiques en compression.

On prévoit selon l'invention, un tube insert 25 sensiblement rectiligne permettant le coulissement du tuyau déformable 20 le long dudit tube insert 25. A cet effet, le tuyau déformable 20 comporte de part et d'autre de sa partie centrale annelée 23 des parties rectilignes 26a et ou 26b au voisinage des raccords rapides 21, et respectivement 22. Le diamètre d'une partie rectiligne 26a ou 26b est légèrement supérieur au diamètre du tube insert 25 de façon à permettre un coulissement sans aucune friction et d'empêcher tout emprisonnement notable de carburant à l'intérieur de la partie annelée 23 susceptible de modifier les caractéristiques élastiques de ladite partie annelée 23.

La platine 13 comporte de préférence un rebord 27 sensiblement plan apte à être fixé de manière étanche sur le réservoir de carburant. De préférence, le rebord 27 est par exemple compatible avec l'utilisation d'un bouchon de vissage 3 et d'un joint 3a de l'art antérieur. On peut ainsi facilement interchanger le dispositif selon l'invention avec un dispositif encombrant et coûteux de l'art antérieur.

Bien que le mode de réalisation de la figure 3 soit particulièrement destiné à l'aspiration de gazole de moteurs diesel, l'invention peut également s'appliquer à des dispositifs comportant une pompe de carburant immergée qui est alors fixée de préférence au niveau d'un raccord 21, entre la tubulure de départ de carburant 14 et la partie 23 de forme annelée du tuyau déformable 20.

## Revendications

1. Dispositif pour aspirer du carburant au fond d'un réservoir déformable, comportant une platine (13) apte à être fixée de manière étanche sur le réservoir, ladite platine comportant une tubulure (14) de départ de carburant et une tubulure (15) de retour de carburant, un pied d'aspiration (16) prenant appui sur le fond (24) du réservoir, caractérisé par le fait que ladite tubulure de départ (14) est reliée audit pied d'aspiration (16) par un tuyau déformable (20) comportant au moins une partie (23) déformable axialement, en particulier de forme annelée, apte à exercer un appui élastique sur le pied d'aspiration (16) contre le fond (24) du réservoir, ledit tuyau déformable (20) coulissant le long d'un tube insert (25) sensiblement rectiligne.

2. Dispositif selon la revendication 1, caractérisé par le fait que ledit tuyau déformable (20) est en polyamide ou analogue.

3. Dispositif selon l'une quelconque des revendications 1 et 2, caractérisé par le fait que les extrémités supérieure (21) et inférieure (22) du tuyau déformable (20) comportent chacune un raccord à emboîtement étanche respectivement sur l'extrémité inférieure de la tubulure de départ (14) et la partie supérieure du pied d'aspiration (16).

4. Dispositif selon l'une quelconque des revendications 1 à 3, caractérisé par le fait que le pied est muni d'un élément de guidage (17) anti-rotation apte à coulisser le long d'un guide (19) raccordé de manière étanche à la tubulure de retour (15).

5. Dispositif selon l'une quelconque des revendications 1 à 4, caractérisé par le fait que la platine comporte un rebord (27) sensiblement plan apte à être fixé de manière étanche sur le réservoir de carburant, un joint (3a) étant serré entre la platine (13) et le réservoir par vissage d'un bouchon (3) sur le réservoir.

## Claims

1. Device for sucking up fuel at the bottom of a deformable tank, including a mounting plate (13) which can be fastened onto the tank in a leaktight manner, the said mounting plate including a fuel outlet pipe (14) and a fuel return pipe (15), a sucking-up base (16) bearing against the bottom (24) of the tank, characterized in that the said outlet pipe (14) is connected to the said sucking-up base (16) by a deformable hose (20) including at least one axially deformable part (23), particularly of ringed shape, able to press the sucking-up base (16) elastically against the bottom (24) of the tank, the said deformable base (20) sliding along a substantially straight insert tube (25).

2. Device according to Claim 1, characterized in that the said deformable hose (20) is made of polyamide or the like.

3. Device according to either one of Claims 1 and 2, characterized in that the upper end (21) and lower end (22) of the deformable hose (20) each include a connector which fits in a leaktight fashion respectively onto the lower end of the outlet pipe (14) and onto the upper end of the sucking-up base (16).

4. Device according to any one of the Claims 1 to 3, characterized in that the base is equipped with an anti-rotation guide element (17) able to slide along a guide (19) connected to the return pipe (15) in a leaktight manner.

5. Device according to any one of Claims 1 to 4, characterized in that the mounting plate includes a substantially flat rim (27) which can be fixed onto the fuel tank in a leaktight manner, a seal (3a) being clamped between the mounting plate (13) and the tank by screwing a cap (3) onto the tank.

## Patentansprüche

1. Vorrichtung zum Ansaugen von Brennstoff am Boden eines verformbaren Behälters, mit einer Platte (13) zur dichten Befestigung auf dem Behälter, welche Platte ein Austrittsrohr (14) für Brennstoff und ein Rücklaufrohr (15) für Brennstoff aufweist, wobei ein Ansaugfuß (16) gegen den Boden (24) des Behälters anliegt, dadurch **gekennzeichnet**, daß das Austrittsrohr (14) mit dem Ansaugfuß (16) über einen verformbaren Schlauch (20) verbunden ist, der wenigstens einen axial verformbaren, insbesonders ringförmig gefalteten Abschnitt (23) aufweist und vorgesehen ist für ein elastisches Andrücken des Ansaugfußes (16) gegen den Boden des Behälters, welcher verformbare Schlauch (20) entlang einem im wesentlichen geraden Rohreinsatz (25) verschiebbar ist.

2. Vorrichtung nach Anspruch 1, dadurch **gekennzeichnet**, daß der verformbare Schlauch (20) aus Polyamid oder dergleichen besteht.

3. Vorrichtung nach einem der Ansprüche 1 und 2, dadurch **gekennzeichnet**, daß das obere Ende (21) und das untere Ende (22) des verformbaren Schlauches (20) jeweils ein aufschlebbares, dichtes Anschlußstück auf dem unteren Ende des Autrittsrohrres (14) und dem oberen Bereich des Ansaugfußes (16) aufweist.

4. Vorrichtung nach einem der Ansprüche 1 bis 3, dadurch **gekennzeichnet**, daß der Fuß mit einem Führungs- und Drehsicherungselement (17) versehen ist, das entlang einer Führung (19) gleiten kann, die in dichter Weise auf dem Rücklaufrohr (15) angebracht ist.

5. Vorrichtung nach einem der Ansprüche 1 bis 4, dadurch **gekennzeichnet**, daß die Platte einen Rand (27) aufweist, der im wesentlichen eben ist und ausgebildet ist zur dichten Befestigung auf dem Brennstoffbehälter, wobei eine Dichtung (3a) eingeklemmt ist zwischen der Platte (13) und dem Behälter durch Aufschrauben einer Kappe (3) auf den Behälter.
